# EUROPÄISCHE PATENTSCHRIFT

(11) **EP 0 485 737 B1**
(45) Veröffentlichungstag und Bekanntmachung des Hinweises auf die Patenterteilung: **03.01.1996**
(21) Anmeldenummer: 91117188.2
(22) Anmeldetag: 09.10.1991
(51) Int. Cl.: G05D 16/20

(54) **Druckregelventil**
Pressure control valve
Soupape de régulation de pression

(30) Priorität: 10.11.1990 DE 4035853
(43) Veröffentlichungstag der Anmeldung: 20.05.1992
(73) Patentinhaber: ROBERT BOSCH GMBH, D-70442 Stuttgart (DE)
(72) Erfinder: Brehm, Werner, Dipl.-Ing., W-7254 Hemmingen (DE); Kimmich, Reiner, W-7120 Bietigheim-Bissingen (DE)

(56) Entgegenhaltungen:
- CH-A- 405 843
- DE-A- 2 240 959
- DE-A- 3 705 082
- DE-A- 3 733 809
- DE-C- 3 709 474
- FR-A- 2 348 525
- US-A- 4 361 309
- US-A- 4 966 195

## Beschreibung

Die Erfindung geht aus von einem Druckregelventil nach der Gattung des Hauptanspruchs (US-PS 4,966,195). Bei derartigen bekannten Ventilen ist der Regeldruck durch einen als Betätigungs- und Stelleinrichtung dienenden Proportionalmagneten einstellbar. Die Regelkennlinie eines solchen Druckregelventiles ist in starkem Maße abhängig von Fertigungs- und Einbautoleranzen, insbesondere vom axialen Abstand des Magnetankers zum Ventilgehäuse bei gegebenem Abstand des Ventilkörpers vom Ventilsitz. Auftretende Streuungen verändern daher die Regelkennlinie einzelner Ventile in erheblichem Maße, so daß oft aufwendige Anpassungsmaßnahmen erforderlich sind. Darüberhinaus bauen derartige Druckregelventile lang und neigen im Regelbetrieb zu Instabilitäten, insbesondere zum Schwingen über den Einregelpunkt hinaus. Der Erfindung liegt die Aufgabe zugrunde, ein kurz bauendes Druckregelventil zu schaffen, bei dem der mit Fertigungs- und Einbautoleranzen behaftete Abstand zwischen Ventilsitz und Magnetanker einfach und dennoch sehr genau einstellbar ist. Dies wird erfindungsgemäß anhand der kennzeichnenden Merkmale des Hauptanspruchs gelöst. Durch die Formgebung des Magnetankers und damit des Magnetkreises baut das Druckregelventil sehr kurz. Durch die Anordnung einer Feder innerhalb des Innenraums der Magnetspule kann die Baulänge des Druckregelventils nochmals verkürzt werden.

Fertigungs- und Einbautoleranzen können auf einfache Weise ausgeglichen werden, und durch die Einstellbarkeit der Vorspannung einer der Federn kann nahezu jede beliebige Ventilkennlinie eingestellt werden, u. a. kann die Wirkung (Restvorspannung) einer einzelnen Feder vermindert oder kompensiert werden.

Wenn in einer weiteren bevorzugten Ausgestaltung des Druckregelventils dessen Ankerraum ölgefüllt ist, werden die Bewegungen des Ventilgliedes und des Ankers hydraulisch gedämpft, und ein Überschwingen über den Einstell- bzw. Regelwert hinaus wird verhindert.

Weitere vorteilhafte Ausgestaltungen der Erfindung ergeben sich aus den Unteransprüchen.

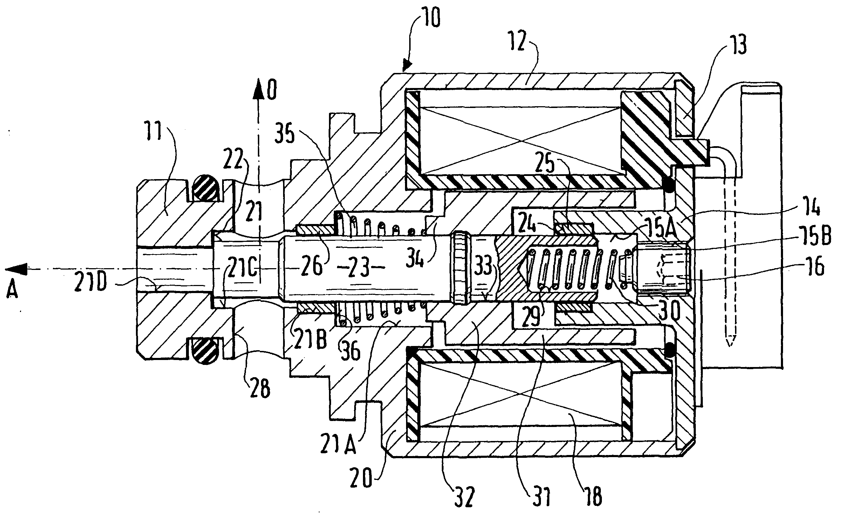

Ein Ausführungsbeispiel der Erfindung ist in der nachfolgenden Beschreibung und Zeichnung näher erläutert. Die Zeichnung zeigt einen Längsschnitt durch ein Druckregelventil.

### Beschreibung des Ausführungsbeispiels

Das Druckregelventil weist ein Gehäuse 10 auf, das aus einem Ventilgehäuse 11 und einem etwa becherförmigen Magnetgehäuse 12 besteht. Das Magnetgehäuse 12 ist durch einen Deckel 13 verschlossen, welcher einen zylindrischen, in das Innere des Gehäuses ragenden Fortsatz 14 hat. Im Fortsatz ist eine durchgehende, abgestufte Längsbohrung 15A, 15B ausgebildet, deren von der Außenseite des Deckels 13 ausgehender Bohrungsabschnitt 15B kleineren Durchmessers durch eine Einstellschraube 16 verschlossen ist. In das Innere des Magnetgehäuses ist eine Magnetspule 18 eingesetzt, deren Innendurchmesser größer ist als der Außendurchmesser des Fortsatzes 14.

Vom Boden 20 des Magnetgehäuses geht eine axial verlaufende, dreifach abgestufte Bohrung 21 aus, die das Ventilgehäuse 11 durchdringt. Die einzelnen Bohrungsabschnitte sind, ausgehend vom Boden 20 des Magnetgehäuses, fortlaufend mit 21A bis 21D bezeichnet. Die zwischen den Bohrungsabschnitten 21D und 21C ausgebildete flache Schulter dient als Ventilsitz 22, der mit der flachen Stirnseite eines zylinderförmigen Ventilkörpers 23 zusammenwirkt. Der Außendurchmesser des dem Ventilsitz 22 zugewandten Endes des Ventilkörpers 23 ist kleiner als der Durchmesser des Bohrungsabschnittes 21C. Das gegenüberliegende Ende des Ventilkörpers ragt bis in den Bohrungsabschnitt 15A des Fortsatzes 14 und ist dort in einem in eine Ringnut 24 eingesetzten Gleitring 25 gelagert. Ein weiterer Gleitring 26 ist in den Bohrungsabschnitt 21B fest eingesetzt und dient ebenfalls der Lagerung des Ventilkörpers 23. Der Ventilsitz 22 ist über den Bohrungsabschnitt 21D mit einer nicht dargestellten Druckmittelquelle verbunden, deren Anschluß mit A bezeichnet ist. Der Druckmittelabfluß erfolgt über eine Querbohrung 28, die das Ventilgehäuse im Bereich des Bohrungsabschnittes 21C durchdringt. Die Querbohrung 28 ist dazu mit einem nicht dargestellten Behälter verbunden, dessen Anschluß mit 0 bezeichnet ist.

Das in den Bohrungsabschnitt 15A ragende Ende des Ventilkörpers weist eine von der Stirnseite ausgehende, axial verlaufende Sackbohrung 29 auf, an deren Grund sich eine Druckfeder 30 abstützt, deren entgegengesetztes Ende an der Einstellschraube 16 anliegt. Durch die Wirkung dieser Feder 30 wird der Ventilkörper 23 gegen den Ventilsitz 22 gedrückt. Auf den Ventilkörper 23 ist im Bereich des Innenraums der Magnetspule 18 ein etwa becherförmiger Magnetanker 31 so reibschlüssig befestigt, daß sein Boden 32 zum Ventilgehäuse 11 weist. Der Boden hat dazu eine der reibschlüssigen Befestigung dienende Längsbohrung 33. Der Außendurchmesser des Magnetankers 31 ist etwas kleiner als der Innendurchmesser der Spule 18, und sein Innendurchmesser ist etwas größer als der Außendurchmesser des Fortsatzes 14, der in das Innere des Magnetankers ragt.

An der Unterseite des Bodens 32 des Magnetankers 31 befindet sich ein Absatz 34, der in den Bohrungsabschitt 21A ragt und dessen Durchmesser kleiner ist als der dieses Bohrungsabschnittes. An diesem Absatz 34 stützt sich eine zweite Druckfeder 35 ab, deren entgegengesetztes Ende an der Schulter 36 zwischen den Bohrungsabschnitten 21B und 21A anliegt.

Durch diese zweite Feder 35 kann die Wirkung der ersten Feder 30 abgeschwächt oder kompensiert werden, so daß die Kennlinie des Ventils beliebig einstellbar ist.

Bei stromlosem Magneten und drucklosem Anschluß A sowie entsprechend eingestellten Federn ist das Druckregelventil geschlossen, d. h. der Ventilkörper 23 liegt am Ventilsitz 22 an. Damit ist der mit der Druckmittelquelle verbundene Bohrungsabschnitt 21D einseitig verschlossen. Übersteigt durch Druckaufbau im Bohrungsabschnitt 21D die Kraft auf die Stirnfläche des Ventilkörpers 23 einen Wert, der größer ist als die Differenz der Kräfte durch die Feder 30 und durch die entgegenwirkende Feder 35, hebt der Ventilkörper 23 von seinem Sitz ab. Dadurch sind über die Bohrungsabschnitte 21D und 21C sowie die Querbohrung 28 die Druckmittelanschlüsse A und 0 verbunden, so daß Druckmittel abfließen kann. Damit erreicht man eine Druckregelung bzw. Druckminderung des bei A zufließenden Druckmittelstroms zwecks Betätigung eines Verbrauchers. Gleichzeitig dringt Druckmittel durch den Lagerspalt zwischen Gleitring 26 und Ventilkörper 23 und gelangt somit in das Innere des Magnetgehäuses 12, so daß dieses mit Druckmittel gefüllt ist. Durch den Lagerspalt zwischen Gleitring 25 und Ventilkörper 23 gelangt Druckmittel weiterhin in den Bohrungsabschnitt 15A.

Wird das Druckregelventil beispielsweise in einem Getriebe eines Kraftfahrzeuges eingesetzt, kann das Druckregelventil bei der Montage mit Druckmittel aufgefüllt werden und unter dem Ölspiegel eingebaut werden. Das Magnetgehäuse ist dann schon vor Einbau und Betätigung druckmittelgefüllt.

Durch entsprechende Ansteuerung des Proportionalmagneten kann der Druck erhöht werden, der nötig ist, das Ventil zu öffnen.

Durch die Druckmittelfüllung des Magnetgehäuses 12 und die dadurch ebenfalls druckmittelgefüllten langen Spalte zwischen Magnetanker 31 und Magnetspule 18 sowie zwischen Magnetanker 31 und Fortsatz 14 wird eine hydraulische Dämpfung erreicht, die Instabilitäten des Regelverhaltens vermindert. Ein weiterer Dämpfungseffekt ergibt sich durch die Volumenänderung des im Ventilgehäuses befindlichen Druckmittels bei Bewegung des Magnetankers und des Ventilkörpers. Dazu muß Druckmittel durch die schmalen Lager spalte zwischen den Gleitringen 25, 26 und dem Ventilkörper 23 durchtreten. Der sich dadurch einstellende weitere Dämpfungseffekt nimmt mit kleiner werdendem Lagerspiel zu.

Durch die Formgebung des Magnetankers, der den dem Magnetfluß dienenden Fortsatz 14 teilweise umfängt, kann das Druckregelventil besonders kurz bauen.

Durch die reibschlüssige Befestigung des Ankers auf dem Ventilkörper kann bei der Montage des Druckregelventils der axiale Arbeitsluftspalt zwischen Magnetanker 31 und Boden 20 des Magnetgehäuses in Bezug auf den Ventilsitz 22 z. B. durch eine Justierscheibe eingestellt werden. Dadurch ist dieses Maß unabhängig von Fertigungs- und Einbautoleranzen werkzeuggebunden und daher nahezu konstant.

Durch die weit auseinanderliegenden Lagerstellen des Ventilkörpers und damit des Magnetankers kann deren Exzentrizität sehr gering gehalten werden. Dadurch werden die magnetischen Querkräfte und damit die Hysterese der Regelkurve des Ventils ebenfalls klein gehalten.

## Patentansprüche

1. Druckregelventil mit einem in einem geschlossenen Gehäuse geführten, reibschlüssig auf einem integrierten Ventilkörper (23) befestigtem Magnetanker (31), wobei der Ventilkörper (23) unter der Wirkung einer Feder (30) mit einem Ventilsitz (22) zusammenwirkt und dessen Schließteil von einem im Ventilgehäuse ausgebildeten Ringraum umgeben ist, und mit einem durch einen Elektromagneten einstellbaren Regeldruck, dadurch gekennzeichnet, daß der Magnetanker (31) sich im Bereich des Innenraums der Magnetspule (18) befindet, hohlzylindrisch ausgebildet und an derjenigen Stirnseite (32), die den Ventilkörper (23) integriert, verschlossen und auf seiner gegenüberliegenden Stirnseite offen ist, daß ein der Magnetflußführung dienender, zylindrischer Fortsatz (14) in das Innere des Magnetankers (31) ragt, daß somit der Magnetanker (31) den Fortsatz (14) teilweise umfängt, daß auf den Ventilkörper (23) eine zweite Feder (35) einwirkt, deren Wirkung der der ersten Feder (30) entgegengerichtet ist, daß die Vorspannung einer der beiden Federn (30, 35) einstellbar ist, und daß die erste Feder (30) im Innenraum der Magnetspule (18) angeordnet ist.

2. Druckregelventil nach Anspruch 1, dadurch gekennzeichnet, daß der den Magnetanker (31) umgebende Raum innerhalb des Gehäuses ölgefüllt ist.

3. Druckregelventil nach Anspruch 1 oder 2, dadurch gekennzeichnet, daß der Ventilkörper (23) im wesentlichen zylinderförmig ist und mit seinem dem Ventilsitz (22) gegenüberliegenden Ende in eine Bohrung (15A) im Fortsatz (14) ragt.

4. Druckregelventil nach einem der Ansprüche 1 bis 3, dadurch gekennzeichnet, daß der Ventilkörper (23) in zwei im Gehäuse angeordneten Lagerstellen (25, 26) geführt ist.

5. Druckregelventil nach einem der Ansprüche 1 bis 4, dadurch gekennzeichnet, daß der Ventilsitz (22) als Flachsitz ausgeführt ist und daß der Ventilkörper (23) eine entsprechende, flache Stirnseite aufweist.

6. Druckregelventil nach einem der Ansprüche 1 bis 5, dadurch gekennzeichnet, daß die Vorspannung der ersten Feder (30) durch eine Einstellschraube (16) verändert werden kann.

## Claims

1. Pressure control valve having a magnet armature (31) which is guided in a closed housing and is fastened in frictional engagement on an integrated valve body (23), the valve body (23) interacting, under the action of a spring (30), with a valve seat (22), and its closing part being surrounded by an annular space configured in the valve housing, and having a control pressure which is adjustable by means of an electromagnet, characterized in that the magnet armature (31) is located in the region of the interior of the magnet coil (18), is of hollow-cylindrical configuration and, at that end face (32) which integrates the valve body (23), is closed and, on its opposite end face, is open, and in that a cylindrical continuation (14) serving the guidance of the magnetic flux juts into the inside of the magnet armature (31), in that the magnet armature (31) thus partially embraces the continuation (14), in that the valve body (23) is acted upon by a second spring (35), the action of which is directed counter to that of the first spring (30), in that the bias of one of the two springs (30, 35) is adjustable, and in that the first spring (30) is disposed in the interior of the magnet coil (18).

2. Pressure control valve according to Claim 1, characterized in that the space within the housing which surrounds the magnet armature (31) is filled with oil.

3. Pressure control valve according to Claim 1 or 2, characterized in that the valve body (23) is essentially cylindrical and juts with its end opposite the valve seat (22) into a bore (15A) in the continuation (14).

4. Pressure control valve according to one of Claims 1 to 3, characterized in that the valve body (23) is guided in two bearings (25, 26) disposed in the housing.

5. Pressure control valve according to one of Claims 1 to 4, characterized in that the valve seat (22) is constructed as a flat seat, and in that the valve body (23) has a corresponding, flat end face.

6. Pressure control valve according to one of Claims 1 to 5, characterized in that the bias of the first spring (30) can be altered by a setting screw (16).

## Revendications

1. Soupape de régulation de pression, avec une armature magnétique (31) guidée dans un boîtier fermé et fixée par frottement sur un corps de soupape intégré (23), ce corps de soupape (23) coopérant sous l'action d'un ressort (30) avec un siège de soupape (22) et sa partie de fermeture étant entourée d'un espace annulaire ménagé dans le boîtier de soupape, et avec une pression de réglage susceptible d'être ajustée par un électro-aimant, soupape de régulation de pression caractérisée en ce que l'armature magnétique (31) se trouve dans la zone de l'espace interne de la bobine magnétique (18), est en forme de cylindre creux et est fermée sur sa face frontale (32), qui intègre le corps de soupape (23), et est ouverte sur sa face frontale opposée, tandis qu'un prolongement cylindrique (14), servant au guidage du flux magnétique, pénètre dans l'intérieure de l'armature magnétique (31) et qu'ainsi l'armature magnétique (31) entoure partiellement le prolongement (14), tandis que sur le corps de soupape (23) agit un second ressort (35) dont l'action est opposée à celle du premier ressort (30) et que la précontrainte de l'un des deux ressorts (30, 35) est réglable et que le premier ressort (30) est disposé dans l'espace interne de la bobine magnétique (18).

2. Soupape de régulation de pression selon la revendication 1, caractérisée en ce que l'espace entourant l'armature magnétique (31) à l'intérieur du boîtier est rempli d'huile.

3. Soupape de régulation de pression selon la revendication 1 ou la revendication 2, caractérisée en ce que le corps de soupape (23) est essentiellement de forme cylindrique et, par son extrémité opposée au siège de soupape (22), pénètre dans un alésage (15A) du prolongement (14).

4. Soupape de régulation de pression selon une des revendications 1 à 3, caractérisée en ce que le corps de soupape (23) est guidé dans deux points d'appui (25, 26) disposés dans le boîtier.

5. Soupape de régulation de pression selon une des revendications 1 à 4, caractérisée en ce que le siège de soupape (22) est réalisé sous la forme d'un siège plat, et en ce que le corps de soupape (23) comprend une face frontale plane correspondante.

6. Soupape de régulation de pression selon une des revendications 1 à 5, caractérisée en ce que la précontrainte du premier ressort (30) peut être modifiée par une vis de réglage (16).
